# EUROPÄISCHE PATENTSCHRIFT

(11) **EP 2 972 633 B1**
(45) Veröffentlichungstag und Bekanntmachung des Hinweises auf die Patenterteilung: **01.02.2017**
(21) Anmeldenummer: 14703542.2
(22) Anmeldetag: 07.02.2014
(51) Int. Cl.: G05D 16/10, G05D 7/01

(54) **SANITÄRES EINBAUTEIL UND DUSCHANORDNUNG**
SANITARY INSTALLATIONS AND SHOWER ASSEMBLY
INSERTS SANITAIRES ET SYSTÈME DE DOUCHE

(30) Priorität: 11.03.2013 DE 202013002281 U
(43) Veröffentlichungstag der Anmeldung: 20.01.2016
(60) Teilanmeldung: 15003622.6
(73) Patentinhaber: Neoperl GmbH, 79379 Müllheim (DE)
(72) Erfinder: TEMPEL, Marc, 79111 Freiburg (DE)
(74) Vertreter: Börjes-Pestalozza, Henrich
(86) Internationale Anmeldenummer: PCT/EP2014/000345
(87) Internationale Veröffentlichungsnummer: WO 2014/139619

(56) Entgegenhaltungen:
- US-A- 3 381 469
- US-A- 3 624 578
- US-A- 3 841 551
- US-A1- 2009 007 972

## Beschreibung

Die Erfindung betrifft ein sanitäres Einbauteil mit einer in einem Strömungspfad angeordneten Mengenreglereinheit, die ein bewegliches Stellelement aufweist, wobei mit dem Stellelement eine durch die Mengenreglereinheit definierte Durchflussmenge einstellbar ist, und mit einem in Abhängigkeit von einer Temperatur form- und/oder größenveränderlichen Steuerelement, welches in dem Strömungspfad angeordnet ist und mit dem Stellelement in Wirkverbindung steht, wobei mit dem Steuerelement bei einer Änderung der Temperatur über einen Temperaturbereich zwischen einem unteren Temperaturwert und einem oberen Temperaturwert das Stellelement entlang eines Stellweges zwischen einer Anfangsposition und einer Endposition verstellbar ist.

Die Erfindung betrifft weiter ein sanitäres Einbauteil, insbesondere wie zuvor beschrieben, mit einer in einem Strömungspfad angeordneten Mengenreglereinheit, die ein bewegliches Stellelement aufweist, wobei mit dem Stellelement eine durch die Mengenreglereinheit definierte Durchflussmenge einstellbar ist, und mit einem in Abhängigkeit von einer Temperatur formveränderlichen Steuerelement, welches in dem Strömungspfad angeordnet ist und mit dem Stellelement in Wirkverbindung steht, wobei eine Erhöhung der Temperatur am Steuerelement eine Verstellung des Stellelements hin zu größeren Durchflussmengen bewirkt, und mit einer das Stellelement beaufschlagenden Rückstellfeder.

Die Erfindung betrifft schließlich eine Duschanordnung mit einem in einem Strömungspfad angeordneten Heizelement, welches vorzugsweise mit einer konstanten Heizleistung ausgebildet ist, und mit einer dem Heizelement in Strömungsrichtung vorgeschalteten sanitären Einbauteil.

Derartige sanitäre Einbauteile sind bekannt und werden verwendet, um eine Durchflussmenge in Abhängigkeit von einer Eingangstemperatur einem Heizelement mit einer konstanten Heizleistung derart zuzuführen, dass die Temperatur der erwärmten Flüssigkeit nahezu konstant ist. Hierbei wird benutzt, dass bei einer höheren Eingangstemperatur eine größere Durchflussmenge eingestellt werden muss, wenn verhindert werden soll, dass das Heizelement die Flüssigkeit über einen Temperatur-Grenzwert hinaus erwärmt.

Beispielsweise ist aus der GB 2339885 B ein sanitäres Einbauteil bekannt, bei welchem ein Stellelement diskret und stufenlos zwischen genau einer Sommerstellung und genau einer Winterstellung umschaltbar ist, um der erhöhten Eingangstemperatur des Wassers im Sommer Rechnung zu tragen.

Aus der US 38 441 551 A kennt man bereits ein temperaturabhängig arbeitendes Durchflussventil, das wahlweise in Abhängigkeit von der Temperatur des durchströmenden Fluids einen von zwei Fluideinlässen mit einem Fluidauslass verbindet. Dabei werden von dem vorbekannten Durchflussventil zwei Temperaturen erkannt, wobei ein erster Fluideinlass mit dem Fluidauslass verbunden wird, wenn ein erster Temperaturbereich zwischen den zwei genannten Temperaturen erkannt wird, und wobei stattdessen der zweite Fluideinlass mit dem Fluidauslass verbunden wird, wenn das Fluid eine vom ersten Temperaturbereich abweichende zweite Temperatur hat. Damit das vorbekannte Durchflussventil zwischen dem ersten und dem zweiten Fluideinlass schalten kann, ist ein bewegliches Stellelement vorgesehen, das mit einem im Strömungspfad angeordneten Steuerelement in Wirkverbindung steht, welches in Abhängigkeit von der Temperatur des Fluids form- und größenveränderbar ist. Bei einem Temperaturanstieg dehnt sich das Steuerelement derart aus, bis das verschieblich geführte Stellelement umfangsseitig statt des ersten Fuideinlasses den zweiten Anlass verschließt.

Das vorbekannte Durchflussventil ist beispielsweise in einer einem Verbrennungsmotor zugeordneten Abgasreinigungsvorrichtung anwendbar (vgl. Figur 5 in US 38 441 551 A). Das vorbekannte Durchflussventil stellt jedoch kein sanitäres Einbauteil dar und auch für die Verwendung des vorbekannten Durchflussventils im Sanitärbereich wird in der US 38 441 551 A kein Bespiel genannt.

Der Erfindung liegt die Aufgabe zugrunde, die Gebrauchseigenschaften eines sanitären Einbauteils zu verbessern.

Zur Lösung der genannten Aufgabe schlägt die Erfindung Merkmale von Anspruch 1 vor. Insbesondere wird somit bei einem sanitären Einbauteil der eingangs genannten Art vorgeschlagen, dass das Steuerelement bei wenigstens einem Zwischentemperaturwert zwischen dem unteren Temperaturwert und dem oberen Temperaturwert eine Zwischenposition des Stellelements im Stellweg zwischen der Anfangsposition und der Endposition einstellt. Von Vorteil ist dabei, dass eine feinere Regelung der Durchflussmenge in Abhängigkeit von der Temperatur am Steuerelement ermöglicht ist. Von Vorteil ist dabei weiter, dass ein größerer Temperaturbereich mit einem brauchbaren Regelverhalten erreichbar ist, als dies bei einer zwischen nur zwei Positionen umschaltbaren Anordnung der Fall wäre. Dabei ist erfindungsgemäß vorgesehen, dass mit dem Stellelement eine Querschnittsfläche einer Öffnung einstellbar ist.

Bei einer vorteilhaften Ausgestaltung kann vorgesehen sein, dass die Zwischenposition von der Anfangsposition und/oder der Endposition wenigstens 1%, vorzugsweise wenigstens 10%, besonders vorzugsweise wenigstens 30%, einer Gesamtlänge des Stellweges beabstandet ist. Von Vorteil ist dabei, dass die Zwischenposition somit deutlich beabstandet von der Anfangsposition und der Endposition angeordnet ist, wodurch eine deutlich abweichende Durchflussmenge einstellbar ist. Somit sind wahrnehmbare Zwischenstufen einstellbar.

Bei einer vorteilhaften Ausgestaltung kann vorgesehen sein, dass das Steuerelement zu wenigstens drei voneinander verschiedenen Temperaturwerten drei voneinander verschiedene Formen und/oder Größen annimmt. Von Vorteil ist dabei, dass eine Abfolge von definierten Zuständen für die Regelung einsetzbar ist.

Bei einer vorteilhaften Ausgestaltung kann vorgesehen sein, dass das Steuerelement wenigstens zwei Materialkomponenten aufweist, die innerhalb des Temperaturbereichs voneinander verschiedene Ausdehnungskoeffizienten aufweisen. Von Vorteil ist dabei, dass die unterschiedlichen Ausdehungskoeffizienten nutzbar sind, um eine temperaturabhängige Formänderung zu erreichen, durch welche das Stellelement betätigbar ist.

Beispielsweise kann vorgesehen sein, dass das Stellelement ein Bimetallelement aufweist. Das Bimetallelement kann beispielsweise ein Bimetallstreifen oder eine Bimetallscheibe sein. Von Vorteil ist dabei, dass Bimetallelemente preisgünstig und zuverlässig sind.

Alternativ oder zusätzlich kann vorgesehen sein, dass das Steuerelement wenigstens zwei Materialkomponenten aufweist, die innerhalb des Temperaturbereichs voneinander verschiedene Phasenübergangstemperaturen haben. Die Verwendung von Materialien mit Phasenübergang hat den Vorteil, dass die schnelle Form- und/oder Größenänderung beim Phasenübergang für die Verstellung des Stellelements nutzbar ist. Auch sind an Phasenübergängen makroskopische Größenänderungen erreichbar, die nicht verstärkt werden müssen, um einen ausreichenden Stellweg zu überdecken.

Bei einer vorteilhaften Ausgestaltung kann vorgesehen sein, dass die Materialkomponenten in einer Stellrichtung hintereinander angeordnet sind. Hierdurch können größere Stellwege erreichbar sein. Es können auch Materialkomponenten mit unterschiedlichen Phasenübergangstemperaturen verwendet sein. Auf diese Weise ist erreichbar, dass bei voneinander unterschiedlichen Temperaturen unterschiedliche Materialkomponenten einen Phasenübergang durchlaufen, so dass ein gestufter Temperaturverlauf entsteht.

Bei einer vorteilhaften Ausgestaltung kann vorgesehen sein, dass die Materialkomponenten jeweils aus einem Material mit Formgedächtnis ausgebildet sind. Materialien mit Formgedächtnis stellen eine gut handhabbare Alternative zu Thermowachsen dar, da sie in normalen Betriebstemperaturen keinen flüssigen Aggregatzustand bilden. Außerdem ist eine definierte Formänderung erreichbar.

Bei einer vorteilhaften Ausgestaltung kann vorgesehen sein, dass die Materialkomponenten ein Materialgemisch bilden.

Somit ist ein kompaktes Steuerelement bildbar, welches zu unterschiedlichen Temperaturen unterschiedlichen Formen und/oder Ausdehnungen annimmt.

Beispielsweise kann vorgesehen sein, dass das Materialgemisch ein Thermowachsgemisch ist, wobei die Materialkomponenten jeweils eine Thermowachskomponente sind und die Phasenübergangstemperaturen durch den jeweiligen Schmelzpunkt der Thermowachskomponente gegeben sind. Thermowachse haben sich im Sanitärbereich als temperaturabhängige Steuerelemente bewährt. Durch Zugabe von Zusatzstoffen lässt sich auf einfache Weise eine gewünschte Phasenübergangstemperatur einstellen. Somit kann der überstreichbare Temperaturbereich aufgefächert und mit einer Vielzahl von Stützpunkten versehen werden.

Bei einer vorteilhaften Ausgestaltung kann vorgesehen sein, dass das Stellelement in der Anfangsposition eine geringere Durchflussmenge definiert als in der Endposition. Somit ist die Durchflussmenge bei niedrigen Temperaturen geringer als bei höheren Temperaturen am Steuerelement. Hierdurch hat eine Flüssigkeit mit einer niedrigen Eingangstemperatur eine größere Verweildauer im Kreislauf und kann sich daher mehr erwärmen. Im Ergebnis erwärmt sich eine einströmende Flüssigkeit mit niedriger Temperatur mehr als eine einströmende Flüssigkeit mit hoher Temperatur. Im Ergebnis lässt sich sogar erreichen, dass die Ausgangstemperatur nahezu oder genau konstant ist, ohne dass eine Heizleistung nachgeregelt werden muss.

Alternativ oder zusätzlich kann vorgesehen sein, dass eine Erhöhung der Temperatur am Steuerelement eine Verstellung des Stellelements hin zu größeren Durchflussmengen bewirkt. Somit ist das sanitäre Einbauteil verwendbar, um eine schwankende Eingangstemperatur einer einströmenden Flüssigkeit durch eine Veränderung der Durchflussmenge derart, dass mit einem nachgeschalteten Heizelement konstanter Heizleistung eine konstante Temperatur erreicht wird, zu kompensieren.

Es kann auch vorgesehen sein, dass mit dem Steuerelement und dem Stellelement eine mit steigender Temperatur zunehmende Durchflussmenge der Mengenreglereinheit eingestellt ist. Somit ist die Verweildauer einer bereits sehr warmen Flüssigkeit im Kreislauf verkürzbar, so dass ein Überhitzen der Flüssigkeit vermeidbar ist.

Die Erfindung wird nun anhand von Ausführungsbeispielen näher beschrieben, ist aber nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: ein erfindungsgemäßes sanitäres Einbauteil in Explosionsdarstellung,
- Fig. 2: das sanitäre Einbauteil aus Fig. 1 in einer Schnittdarstellung,
- Fig. 3: das sanitäre Einbauteil aus Fig. 1 in Schnittdarstellung mit formveränderten Steuerelement,
- Fig. 4: ein weiteres erfindungsgemäßes sanitäres Einbauteil in Explosionsdarstellung mit einem Steuerelement mit Formgedächtnis,
- Fig. 5 bis Fig. 7: das sanitäre Einbauteil aus Fig. 4 in jeweils einer Schnittdarstellung mit in unterschiedlichen Positionen befindlichem Stellelement,
- Fig. 8: ein weiteres erfindungsgemäßes sanitäres Einbauteil in Schnittdarstellung in der Anfangsposition bei Kaltwasser,
- Fig. 9: das sanitäre Einbauteil gemäß Fig. 8 in der Endposition bei Warmwasser,
- Fig. 10: das sanitäre Einbauteil gemäß Fig. 8 in dreidimensionaler Explosionsdarstellung,
- Fig. 11: eine erfindungsgemäße Duschanordnung und
- Fig. 12: eine Wellenfeder.

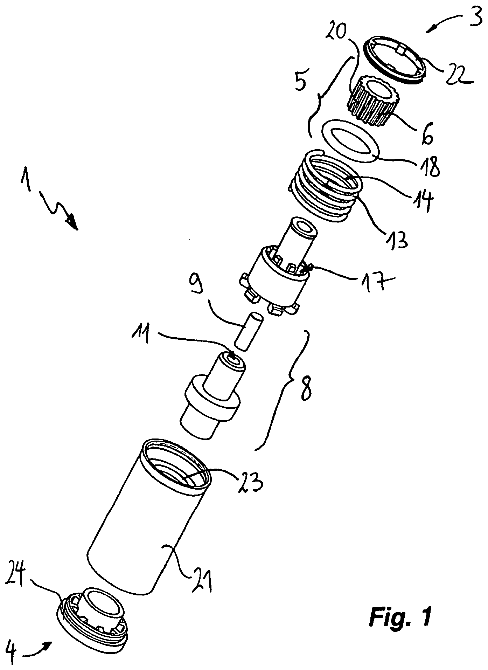

Figur 1 zeigt in einer Explosionsdarstellung ein erfindungsgemäßes sanitäres Einbauteil 1.

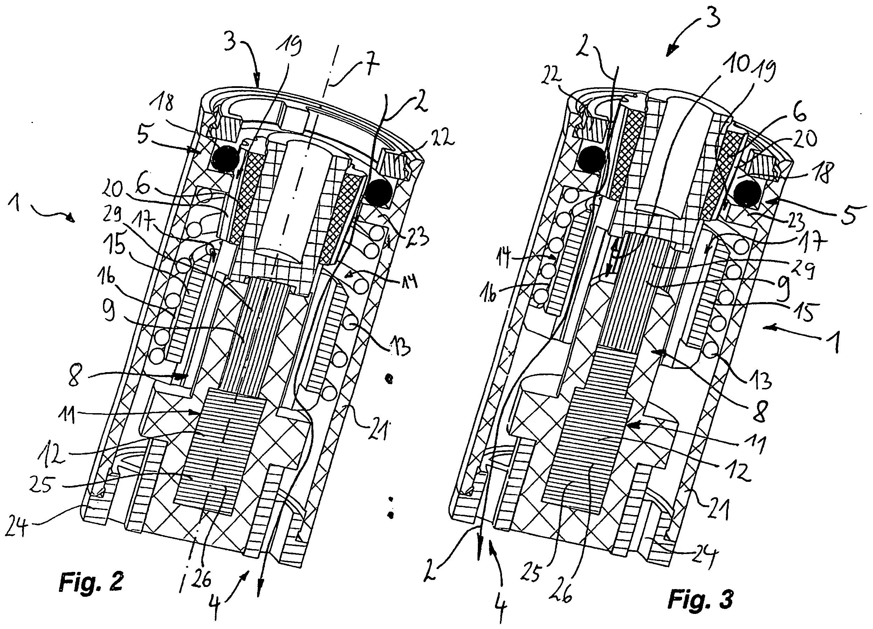

Figuren 2 und 3 zeigen das sanitäre Einbauteil 1 aus Figur 1 in Schnittdarstellungen in unterschiedlichen Schaltpositionen.

Im Folgenden werden die Figuren 1, 2 und 3 gemeinsam beschrieben.

In dem sanitären Einbauteil 1 ist ein Strömungspfad 2 ausgebildet, welcher von einer Eingangsseite 3 zu einer Ausgangsseite 4 führt.

In dem Strömungspfad 2 ist eine Mengenreglereinheit 5 angeordnet.

Die Mengenreglereinheit 5 weist ein bewegliches Stellelement 6 auf.

Das Stellelement 6 ist axial, das heißt parallel zu einer Längsachse 7, verschiebbar in dem sanitären Einbauteil 1 angeordnet.

Mit dem Stellelement 6 ist durch diese Verschiebung eine veränderliche Durchflussmenge entlang des Strömungspfades 2 einstellbar.

In dem Strömungspfad 2 ist weiter ein Steuerelement 8 angeordnet, welches eine mit der am Steuerelement 8 herrschenden Temperatur veränderliche Größe oder Form aufweist.

Das Steuerelement 8 steht in Wirkverbindung mit dem Stellelement 7 und stellt dessen Position durch die Größen- und/oder Formänderung temperaturabhängig ein.

Das Steuerelement 8 weist einen Kolben 9 auf, dessen Lage zwischen einer eingefahren Anfangsposition (Fig. 2) und einer ausgefahrenen Endposition (Fig. 3) verstellbar ist.

Die Anfangsposition gehört hierbei zu einem unteren Temperaturwert, während die Endposition bei einem oberen Temperaturwert eingenommen wird.

Bei einer Temperaturänderung über den Temperaturbereich zwischen der unteren Temperatur und der oberen Temperatur verstellt das Steuerelement 8 das Stellelement 6 entlang des Stellweges 10.

In einer Aufnahmekammer 11 des Steuerelements 8 ist ein Materialgemisch 12 angeordnet. Dieses Materialgemisch 12 weist mehrere Materialkomponenten 25, 26 auf, die jeweils voneinander abweichende Phasenübergangstemperaturen haben. Alternativ können die Materialkomponenten 25, 26 separat voneinander entlang des Stellwegs hintereinander in der Aufnahmekammer 11 angeordnet sein, um seriell zu wirken.

Im Ausführungsbeispiel ist das Materialgemisch 12 ein Thermowachsgemisch, und die Materialkomponenten sind unterschiedliche Thermowachse mit jeweils individueller Phasenübergangstemperatur. Die Phasenübergangstemperatur sind hierbei Schmelztemperaturen.

Bei einer Erwärmung oder Abkühlung über den erwähnten Temperaturbereich werden diese Phasenübergangstemperaturen sukzessive erreicht.

Bei jeder Phasenübergangstemperatur durchläuft die zugehörige Materialkomponente einen Phasenübergang und expandiert schlagartig bei Erwärmung beziehungsweise kontrahiert schlagartig bei Abkühlung. Hierdurch wird der Kolben 9 ein vorbestimmtes Stück nach außen getrieben.

Da die Phasenübergangstemperaturen voneinander beabstandet über den Temperaturbereich verteilt sind, ergibt sich so ein gestuftes Expandieren/Kontrahieren.

Näherungsweise mit einer Güte der Näherung, die mit der Anzahl der verwendeten Materialkomponenten zunimmt, ergibt sich so eine kontinuierliche temperaturabhängige Stellkurve des Stellelements 6.

Die einzelnen Zwischenpositionen sind gleichmäßig über den Stellweg 10 verteilt, sodass Zwischenpositionen existieren und eingenommen werden, die wenigstens 10% oder sogar wenigstens 30% der Gesamtlänge des Stellweges 10 von der Anfangsposition und der Endposition entfernt sind.

In den Figuren 2 und 3 sind zwei Größen des Steuerelements 8 gezeigt, die zu zwei Temperaturwerten gehören. Zur Einstellung der übrigen Zwischenpositionen nimmt das Steuerelement 6 zwischen den Extrempositionen liegende Größen an. Diese Zwischenpositionen gehören jeweils zu einem individuell zugeordneten Temperaturwert.

Das Stellelement 6 weist eine konische Grundform auf, die sich entgegen der Stellrichtung bei Temperaturerhöhung verjüngt.

Hierdurch ist bei hohen Temperaturen die Querschnittsfläche der Öffnung 19 größer als bei niedrigen Temperaturen.

Dies bedeutet, dass die Flüssigkeit im sanitären Einbauteil 1 umso schneller fließt, je höher die Eingangstemperatur am Steuerelement 8 ist. Hierdurch erwärmt sich die Flüssigkeit weniger stark.

Andererseits nimmt die Querschnittsfläche ab, wenn die Eingangstemperatur abnimmt und also die Differenz zwischen der Eingangstemperatur und einer (konstanten) Ausgangstemperatur zunimmt. Denn dann muss die Flüssigkeit stärker durchflussmengenbegrenzt sein, um eine ausreichende Erwärmung sicherstellen zu können.

In dem sanitären Einbauteil 1 ist weiter eine Rückstellfeder 13 angeordnet, die das Stellelement 6 bei einer Abkühlung in die Anfangsposition zurückstellt.

Die Rückstellfeder 13 ist im Strömungspfad 2 der Mengenreglereinheit 5 nachgeordnet und somit auf derselben Seite der Mengenreglereinheit 5 wie das Steuerelement 8 angeordnet.

Die Rückstellfeder 13 ist als Schraubenfeder ausgebildet und umschließt das Steuerelement 8.

Mit anderen Worten ist das Steuerelement 8 zumindest teilweise in einem von der Rückstellfeder 13 begrenzten Innenraum 14 (zumindest in ihrem Zustand gemäß Fig. 2) angeordnet. Die Steuerverbindung 29 - hier der Kolben 9 -, über welche das Steuerelement 8 das Stellelement 6 verstellt, durchgreift somit den Innenraum 14.

Bei weiteren Ausführungsbeispielen ist statt der Schraubenfeder eine Wellenfeder 35 als Rückstellfeder 13 ausgebildet.

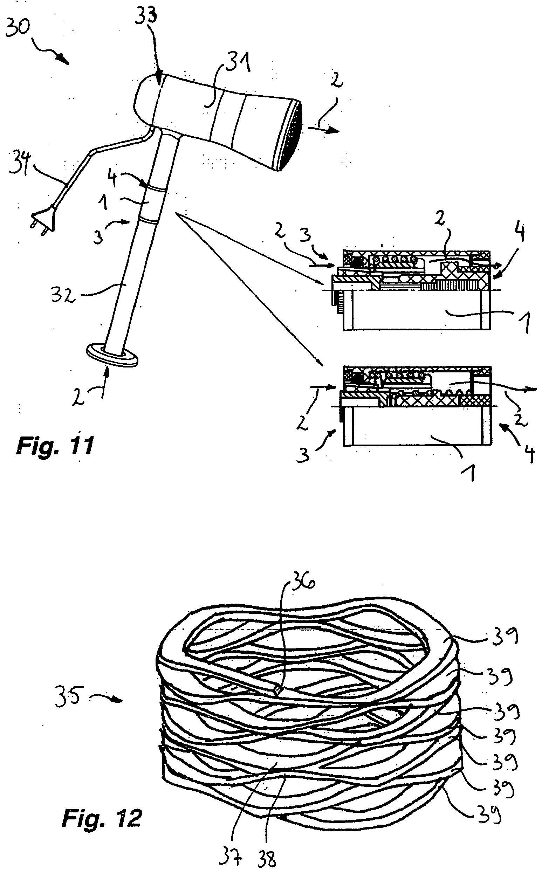

Eine derartige Wellenfeder 35 zeigt beispielhaft Fig. 12.

Die Wellenfeder 35 ist wie eine Schraubenfeder schraubenförmig gewunden.

Im Unterschied zu einer herkömmlichen Schraubenfeder bildet der Draht 36 in seinem Verlauf jedoch Täler 37 und Berge 38.

Fig. 12 zeigt einen Zustand der Wellenfeder 35, in dem sich die Windungen 39 punkt- oder abschnittweise berühren, ohne dass die Wellenfeder 35 auf Block ist. Vielmehr kann die Wellenfeder 35 weiter in Axialrichtung komprimiert werden.

Die Täler 37 und Berge 38 der einzelnen Windungen 39 sind in Umfangsrichtung so versetzt, dass jeweils ein Berg 38 einer Windung 39 ein Tal 37 der benachbarten Windung 39 berührt und umgekehrt. Hierdurch ergibt sich die erwähnte Elastizität auch über die berührende Position hinaus.

In dem Innenraum 14 in Fig. 1 bis 3 ist außerdem ein Führungselement 15 angeordnet, welches mit dem Stellelement 6 verbunden ist.

Das Führungselement 15 weist radial außenseitig einen Außenzylinder 16 auf, an welchem die Rückstellfeder 13 zur Führung anliegt.

In dem Führungselement 15 ist ein axial verlaufender Durchströmkanal 17 ausgebildet, durch welchen die strömende Flüssigkeit auf das Steuerelement 8 geleitet wird.

Somit ist das Steuerelement 8 thermisch gut an die Temperatur der strömenden Flüssigkeit angekoppelt.

Zur Mengenregelung weist die Mengenreglereinheit 5 einen O-Ring 18 auf, welcher von den Stellelement 6 durchsetzt ist.

Dieser O-Ring 18 wird bei zunehmendem zuströmseitigen Druck gegen eine ringförmige Öffnung 19 gepresst, wodurch diese immer weiter verengt wird. An dem mit einer konischen Grundform ausgestatteten Stellelement 6 sind längs des Strömungspfades 2 verlaufende Nuten 20 ausgebildet, an denen der O-Ring 19 anliegt.

Durch die Verengung erhöht sich der Strömungswiderstand, wodurch sich die gewünschte Mengenbegrenzung ergibt.

Durch Verstellen des Stellelements 6 in axialer Richtung kann die Querschnittsfläche der Öffnung 19 verändert werden, wodurch sich ein anderer Wert für die Durchflussmenge der realisierten Mengenbegrenzung ergibt. Bei der gezeigten Anordnung des Stellelements 6 und des Steuerelements 8 ergibt sich eine steigende Durchflussmenge mit steigender Temperatur am Steuerelement 8.

Das sanitäre Einbauteil 1 wird nach außen gehäusebildend von einer rohrförmigen Hülse 21 umschlossen, die an der Eingangsseite 3 und der Ausgangsseite 4 offen ausgebildet ist.

Die rohrförmige Hülse 21 nimmt die Mengenreglereinheit 5, das Steuerelement 8 und die Rückstellfeder 13 auf.

An dem Axialende der Eingangsseite 3 ist ein erster Einsatz 22 eingeklipst, welcher den O-Ring 18 hält.

Innenseitig ist in der rohrförmigen Hülse 21 an dem Axialende eine Rippe 23 ausgebildet, an welcher sich die Rückstellfeder 13 abstützt. Die Rippe 23 trägt außerdem den O-Ring 18. Es können auch mehrere Rippen axial nebeneinander ausgebildet sein, die Haltefunktionen übernehmen.

An dem zweiten Axialende, also an der Ausgangsseite 4, ist ein zweiter Einsatz 24 eingeklipst, an welchem sich das Steuerelement 8 abstützt.

Somit ist eine funktionsfähig vormontierbare Einheit eines sanitären Einbauteils 1 bereitgestellt, die als Ganzes montierbar ist.

An die Ausgangsseite 4 wird im Betrieb ein nicht weiter dargestelltes, an sich bekanntes Heizelement mit einer konstanten Heizleistung angeschlossen. Je nach Temperatur an der Eingangsseite 3 erhöht oder erniedrigt das sanitäre Einbauteil 1 die Durchflussmenge, um die an der Ausgangsseite ausströmende Flüssigkeit, beispielsweise Wasser, auf eine konstante Temperatur aufheizen zu können, ohne dass die Heizleistung variiert werden muss.

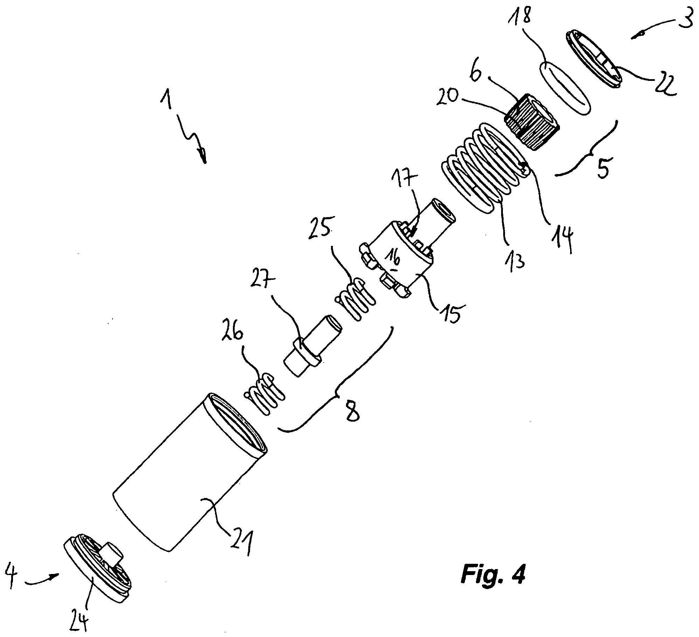

Fig. 4 bis 7 zeigen ein weiteres erfindungsgemäßes sanitäres Einbauteil 1. Konstruktiv und/oder funktionell zu dem Ausführungsbeispiel nach Fig. 1 bis 3 gleichartige oder identische Bauteile und Funktionseinheiten sind mit denselben Bezugszeichen bezeichnet und nicht gesondert beschrieben. Die vorstehenden Erläuterungen gelten daher entsprechend.

Das sanitäre Einbauteil 1 gemäß Fig. 4 bis 7 unterscheidet sich von dem sanitären Einbauteil 1 gemäß Fig. 1 bis 3 dadurch, dass statt des Materialgemisches 12 zwei Materialkomponenten 25, 26 seriell im Strömungspfad 2 hintereinander angeordnet sind.

Ein Führungselement 27 führt die Materialkomponenten 25, 26 und verbindet sie miteinander.

Die Materialkomponenten 25, 26 sind aus unterschiedlichen Materialien mit Formgedächtnis gefertigt und weisen jeweils eine Phasenübergangstemperatur auf, oberhalb derer sie sich schlagartig ausdehnen.

Die Phasenübergangstemperatur lässt sich durch geeignete Wahl von Zusatzstoffen einstellen.

Hierbei hat die Materialkomponente 25 eine niedrigere Phasenübergangstemperatur als die Materialkomponente 26.

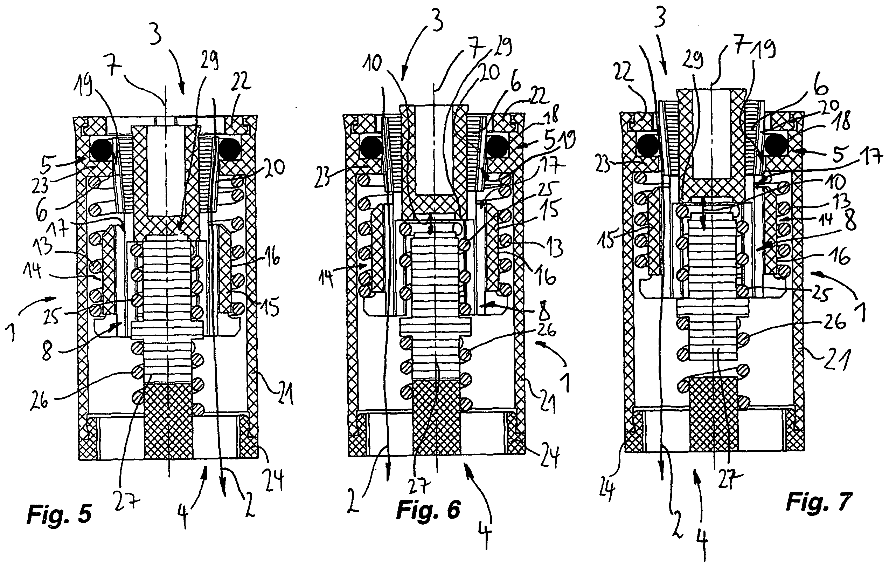

Fig. 5 zeigt das sanitäre Einbauteil 1 bei dem unteren Temperaturwert.

Beide Materialkomponenten 25, 26 sind kontrahiert, und es ist ein minimaler Durchfluss an der Mengenreglereinheit 5 eingestellt.

Wird nun das einströmende Wasser erwärmt, so wird zuerst die Phasenübergangstemperatur der ersten Materialkomponente 25 erreicht, und diese Materialkomponente dehnt sich schlagartig um einen bestimmten Betrag aus. Die Öffnung 19 wird daher etwas weiter geöffnet und nimmt nun eine Zwischenposition zwischen der Anfangsposition gemäß Fig. 5 und der Endposition gemäß Fig. 7 ein. Es ergibt sich die Situation gemäß Fig. 6.

Bleibt die Temperatur der einströmenden Flüssigkeit nun konstant, beliebt es bei der Zwischenposition gemäß Fig. 6. Die Zwischenposition ist mit anderen Worten stabil.

Wird die Temperatur der einströmenden Flüssigkeit weiter erhöht, so wird die Phasenübergangstemperatur der zweiten Materialkomponente 26 erreicht, und diese dehnt sich schlagartig aus.

Im Ergebnis addieren sich die Ausdehnungen der Materialkomponenten 25, 26, da diese seriell angeordnet sind.

Es wird nun die Endposition gemäß Fig. 7 angenommen, die eine maximale Durchflussmenge an der Mengenreglereinheit 5 definiert.

Es ist erkennbar, dass der Stellweg 10 in Fig. 7 länger als in Fig. 6 ist.

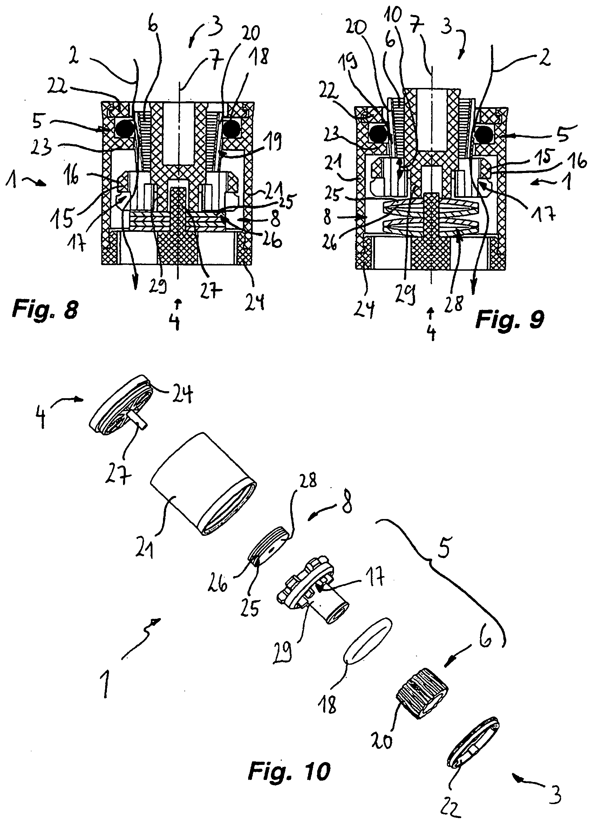

Fig. 8 bis 10 zeigen ein weiteres erfindungsgemäßes sanitäres Einbauteil 1. Konstruktiv und/oder funktionell zu den Ausführungsbeispielen nach Fig. 1 bis 7 gleichartige oder identische Bauteile und Funktionseinheiten sind mit denselben Bezugszeichen bezeichnet und nicht gesondert beschrieben. Die vorstehenden Erläuterungen gelten daher entsprechend.

Bei dem Ausführungsbeispiel gemäß Fig. 8 bis 10 ist statt des Materials mit Formgedächtnis eine Stapelanordnung von Bimetallelementen 28 eingesetzt.

Jedes Bimetallelement 28 ist scheibenförmig ausgebildet, wobei in jeder Scheibe zwei Materialkomponenten 25, 26 mit voneinander abweichenden thermischen Ausdehnungskoeffizienten miteinander verbunden sind.

Somit setzt das Bimetallelement 28 eine unterschiedliche Erwärmung der verschiedenen miteinander verbundenen Materialkomponenten 25, 26 in eine makroskopische Formänderung um, mit welcher das Stellelement 6 stellbar ist.

Fig. 8 zeigt die Anfangsposition des Stellelements 6 bei dem unteren Temperaturwert, Fig. 9 die Endposition des Stellelements 6 bei dem oberen Temperaturwert. In der Endposition ist jedes Bimetallelement 28 gewölbt.

Da sich die Bimetallelemente 28 mit steigender Temperatur kontinuierlich ausdehnen, wird das Stellelement 6 bei Zwischentemperaturwerten zwischen dem unteren Temperaturwert und dem oberen Temperaturwert in Zwischenpositionen längs des Stellwegs 10 verstellt.

Bei einer Abkühlung verformt sich jedes Bimetallelement 28 wieder zurück in die Ausgangsform gemäß Fig. 8. Der an der Eingangsseite 3 anliegende Wasserdruck reicht in der Regel aus, um das Stellelement 6 zurück in die Ausgangsposition zu stellen.

Unterstützend kann eine nicht weiter dargestellte Rückstellfeder analog zu den vorhergehenden Ausführungsbeispielen vorgesehen sein, die durch das Führungselement 15 wie zuvor beschrieben geführt sein kann.

Fig. 11 zeigt eine erfindungsgemäße Duschanordnung 30.

Die Duschanordnung 30 hat einen Duschkopf 31, der an einer Zulaufleitung 32 befestigt ist.

Die Zulaufleitung 32 ist an einer nicht weiter dargestellten Wand oder Decke befestigt.

Am Duschkopf 31 ist ein Heizelement 33 angeordnet, der über einen elektrischen Anschluss 34 betreibbar ist, um das Wasser aus der Zulaufleitung 32 aufzuheizen. Das Heizelement 33 hat eine konstante Heizleistung, die durch die elektrische Leistungsaufnahme gegeben ist.

Die Zulaufleitung 32 definiert einen Strömungspfad 2 für fließendes Wasser.

In diesen Strömungspfad 2 ist in die Zulaufleitung 32 ein erfindungsgemäßes sanitäres Einbauteil 1 eingesetzt. In Fig. 11 sind rechts beispielhaft die sanitären Einbauteile gemäß Fig. 1 bis 3 (oben) und gemäß Fig. 4 bis 7 (unten) dargestellt. Es können jedoch auch andere erfindungsgemäße sanitäre Einbauteile 1 eingesetzt sein, beispielsweise das sanitäre Einbauteil 1 gemäß Fig. 8 bis 10.

Der Duschkopf 31 kann bei weiteren Ausführungsbeispielen auch als Hand- oder Seitenbrause ausgebildet sein.

Im Betrieb stellt das sanitäre Einbauteil 1 die Durchflussmenge in Abhängigkeit von der Wassertemperatur an der Eingangsseite 3 so ein, dass das Heizelement 33 das fließende Wasser auf eine konstante Gebrauchstemperatur erwärmt. Die Durchflussmenge wird demnach umso größer, je näher die Wassertemperatur an der Eingangsseite 3 an die Gebrauchstemperatur rückt. Die Durchflussmenge wird umgekehrt umso kleiner, je größer der Abstand zwischen der Wassertemperatur an der Eingangsseite 3 und der Gebrauchstemperatur ist, damit die begrenzte Heizleistung des Heizelements 33 ausreicht, um die Gebrauchstemperatur tatsächlich zu erreichen.

Da das Stellelement 6 - wie beschrieben - in feinen Stufen oder sogar kontinuierlich temperaturabhängig verstellbar ist, können so auch geringere Temperaturschwankungen im Betrieb, wie sie beispielsweise beim Wechsel von abgestandenem Wasser auf frisch zugeführtes Wasser aus den Versorgungsnetz auftreten, ausgeglichen werden.

Bei einem sanitären Einbauteil 1 mit einer Mengenreglereinheit 5 und einem eine Durchflussmenge einstellenden, beweglichen Stellelement 6, welches in Steuerverbindung mit einem temperatursensitiven Steuerelement 8 steht, wird vorgeschlagen, eine Rückstellfeder 13 in Strömungsrichtung auf derselben Seite der Mengenreglereinheit 5 wie das Steuerelement 5 anzuordnen und/oder das Steuerelement 8 zur Einnahme wenigstens einer Zwischenposition auszubilden.

### Bezugszeichenliste

- 1: sanitäres Einbauteil
- 2: Strömungspfad
- 3: Eingangsseite
- 4: Ausgangsseite
- 5: Mengenreglereinheit
- 6: Stellelement
- 7: Längsachse
- 8: Steuerelement
- 9: Kolben
- 10: Stellweg
- 11: Aufnahmekammer
- 12: Materialgemisch
- 13: Rückstellfeder
- 14: Innenraum
- 15: Führungselement
- 16: Außenzylinder
- 17: Durchströmkanal
- 18: O-Ring
- 19: Öffnung
- 20: Nut
- 21: rohrförmige Hülse
- 22: erster Einsatz
- 23: Rippe
- 24: zweiter Einsatz
- 25: Materialkomponente
- 26: Materialkomponente
- 27: Führungselement
- 28: Bimetallelement
- 29: Steuerverbindung
- 30: Duschanordnung
- 31: Duschkopf
- 32: Zulaufleitung
- 33: Heizelement
- 34: Anschluss
- 35: Wellenfeder
- 36: Draht
- 37: Tal
- 38: Berg
- 39: Windung

## Patentansprüche

1. Sanitäres Einbauteil (1) mit einer in einem Strömungspfad (2) angeordneten Mengenreglereinheit (5), die ein bewegliches Stellelement (6) aufweist, wobei mit dem Stellelement (6) eine durch die Mengenreglereinheit (5) definierte Durchflussmenge einstellbar ist, und mit einem in Abhängigkeit von einer Temperatur form- und/oder größenveränderlichen Steuerelement (8), welches in dem Strömungspfad (2) angeordnet ist und mit dem Stellelement (6) in Wirkverbindung steht, wobei mit dem Steuerelement (8) bei einer Änderung der Temperatur über einen Temperaturbereich zwischen einem unteren Temperaturwert und einem oberen Temperaturwert das Stellelement (6) entlang eines Stellweges (10) zwischen einer Anfangsposition und einer Endposition verstellbar ist, **dadurch gekennzeichnet, dass** das Steuerelement (8) bei wenigstens einem Zwischentemperaturwert zwischen dem unteren Temperaturwert und dem oberen Temperaturwert eine Zwischenposition des Stellelements (6) im Stellweg zwischen der Anfangsposition und der Endposition einstellt, und dass mit dem Stellelement (6) eine Querschnittsfläche einer Öffnung (19) einstellbar ist.

2. Sanitäres Einbauteil (1) nach Anspruch 1, **dadurch gekennzeichnet, dass** die Zwischenposition von der Anfangsposition und/oder der Endposition wenigstens 1%, vorzugsweise wenigstens 10%, besonders vorzugsweise wenigstens 30%, einer Gesamtlänge des Stellweges (10) beabstandet ist.

3. Sanitäres Einbauteil (1) nach Anspruch 1 oder 2, **dadurch gekennzeichnet, dass** das Steuerelement (8) zu wenigstens drei voneinander verschiedenen Temperaturwerten drei voneinander verschiedene Formen und/oder Größen annimmt und/oder dass eine Erhöhung der Temperatur am Steuerelement (8) eine Verstellung des Stellelements (6) hin zu größeren Durchflussmengen bewirkt.

4. Sanitäres Einbauteil nach einem der Ansprüche 1 bis 3, **dadurch gekennzeichnet, dass** das Steuerelement (8) wenigstens zwei Materialkomponenten (25, 26) aufweist, die innerhalb des Temperaturbereichs voneinander verschiedene Ausdehnungskoeffizienten und/oder Phasenübergangstemperaturen haben.

5. Sanitäres Einbauteil (1) nach einem der Ansprüche 1 bis 4, **dadurch gekennzeichnet, dass** das Stellelement (6) ein Bimetallelement (28), insbesondere einen Bimetallstreifen oder eine Bimetallscheibe, aufweist.

6. Sanitäres Einbauteil (1) nach Anspruch 4 oder 5, **dadurch gekennzeichnet, dass** die Materialkomponenten (25, 26) in einer Stellrichtung hintereinander angeordnet sind und/oder dass die Materialkomponenten (25, 26) jeweils aus einem Material mit Formgedächtnis ausgebildet sind.

7. Sanitäres Einbauteil (1) nach einem der Ansprüche 4 bis 6, **dadurch gekennzeichnet, dass** die Materialkomponenten (25, 26) ein Materialgemisch bilden und/oder dass das Materialgemisch ein Thermowachsgemisch ist, wobei die Materialkomponenten (25, 26) jeweils eine Thermowachskomponente sind und die Phasenübergangstemperaturen durch den jeweiligen Schmelzpunkt der Thermowachskomponente gegeben sind.

8. Sanitäres Einbauteil (1) nach einem der Ansprüche 1 bis 7, **dadurch gekennzeichnet, dass** das Stellelement (6) in der Anfangsposition eine geringere Durchflussmenge definiert als in der Endposition und/oder dass mit dem Steuerelement (8) und dem Stellelement (6) eine mit steigender Temperatur abnehmende Durchflussmenge der Mengenreglereinheit (5) eingestellt ist.

## Claims

1. Sanitary installation part (1) having a quantity regulation unit (5) disposed in a flow path (2) and comprising a moveable setting element (6), wherein by means of the setting element (6) a throughflow quantity defined by the quantity regulation unit (5) can be adjusted, and having a control element (8) which can change in shape and/or size depending upon a temperature, is disposed in the flow path (2) and is operatively connected to the setting element (6), wherein by means of the control element (8) the setting element (6) can be displaced along a setting path (10) between a starting position and an end position during a change in the temperature over a temperature range between a lower temperature value and an upper temperature value, **characterised in that** the control element (8) adjusts an intermediate position of the setting element (6) in the setting path between the starting position and the end position in the case of at least one intermediate temperature value between the lower temperature value and the upper temperature value, and that a cross-sectional area of an opening (19) can be adjusted by means of the setting element (6).

2. Sanitary installation part (1) as claimed in claim 1, **characterised in that** the intermediate position is spaced apart from the starting position and/or the end position by at least 1%, preferably at least 10%, particularly preferably at least 30%, of a total length of the setting path (10).

3. Sanitary installation part (1) as claimed in claim 1 or 2, **characterised in that** at at least three mutually different temperature values, the control element (8) adopts three mutually different shapes and/or sizes, and/or that an increase in the temperature at the control element (8) effects a displacement of the setting element (6) towards greater throughflow quantities.

4. Sanitary installation part (1) as claimed in any one of claims 1 to 3, **characterised in that** the control element (8) has at least two material components (25, 26) which, within the temperature range, have mutually different coefficients of expansion and/or phase transition temperatures.

5. Sanitary installation part (1) as claimed in any one of claims 1 to 4, **characterised in that** the setting element (6) has a bimetallic element (28), in particular a bimetallic strip or a bimetallic disc.

6. Sanitary installation part (1) as claimed in claim 4 or 5, **characterised in that** the material components (25, 26) are disposed one behind the other in a setting direction and/or that the material components (25, 26) are each formed from a shape-memory material.

7. Sanitary installation part (1) as claimed in any one of claims 4 to 6, **characterised in that** the material components (25, 26) form a material mixture and/or that the material mixture is a thermowax mixture, wherein the material components (25, 26) are each a thermowax component and the phase transition temperatures are determined by the respective melting point of the thermowax component.

8. Sanitary installation part (1) as claimed in any one of claims 1 to 7, **characterised in that** in the starting position, the setting element (6) defines a smaller throughflow quantity than in the end position and/or that by means of the control element (8) and the setting element (6) a throughflow quantity of the quantity regulation unit (5), which decreases as the temperature increases, is adjusted.

## Revendications

1. Insert sanitaire (1) avec une unité de régulateur de débit (5) disposée dans un chemin d'écoulement (2), qui présente un élément de réglage mobile (6), dans lequel un débit défini à travers l'unité de régulateur de débit (5) peut être réglé avec l'élément de réglage (6), et avec un élément de commande (8) variable en forme et/ou en grandeur en fonction d'une température, qui est disposé dans le chemin d'écoulement (2) et qui est en liaison active avec l'élément de réglage (6), dans lequel l'élément de réglage (6) peut être réglé, lors d'une variation de la température sur une plage de température entre une valeur de température inférieure et une valeur de température supérieure, avec l'élément de commande (8) le long d'une course de réglage (10) entre une position initiale et une position finale, **caractérisé en ce que** l'élément de commande (8) règle, pour au moins une valeur de température intermédiaire entre la valeur de température inférieure et la valeur de température supérieure, une position intermédiaire de l'élément de réglage (6) dans la plage de réglage entre la position initiale et la position finale et **en ce qu'**une surface de section transversale d'une ouverture (19) est réglable avec l'élément de réglage (6).

2. Insert sanitaire (1) selon la revendication 1, **caractérisé en ce que** la position intermédiaire est espacée de la position initiale et/ou de la position finale d'au moins 1 %, de façon préférée d'au moins 10 %, de façon particulièrement préférée encore d'au moins 30 %, d'une longueur totale de la course de réglage (10).

3. Insert sanitaire (1) selon la revendication 1 ou 2, **caractérisé en ce que** l'élément de commande (8) prend, pour au moins trois valeurs de température différentes l'une de l'autre, trois formes et/ou grandeurs différentes l'une de l'autre et/ou **en ce qu'**une augmentation de la température au niveau de l'élément de commande (8) provoque un réglage de l'élément de réglage (6) vers des débits plus élevés.

4. Insert sanitaire selon l'une quelconque des revendications 1 à 3, **caractérisé en ce que** l'élément de commande (8) présente au moins deux composants de matériau (25, 26) qui, à l'intérieur de la plage de température, présentent des coefficients de dilatation et/ou des températures de transition de phase différent(e)s l'un(e) de l'autre.

5. Insert sanitaire (1) selon l'une quelconque des revendications 1 à 4, **caractérisé en ce que** l'élément de réglage (6) présente un élément bimétallique (28), en particulier une lamelle bimétallique ou une rondelle bimétallique.

6. Insert sanitaire (1) selon la revendication 4 ou 5, **caractérisé en ce que** les composants de matériau (25, 26) sont disposés l'un derrière l'autre dans une direction de réglage et/ou **en ce que** les composants de matériau (25, 26) sont réalisés respectivement en un matériau à mémoire de forme.

7. Insert sanitaire (1) selon l'une quelconque des revendications 4 à 6, **caractérisé en ce que** les composants de matériau (25, 26) forment un mélange de matériaux et/ou **en ce que** le mélange de matériaux est un mélange de cires thermiques, dans lequel les composants de matériau (25, 26) sont respectivement un composant de cire thermique et les températures de transition de phase sont données par le point de fusion respectif des composants de cire thermique.

8. Insert sanitaire (1) selon l'une quelconque des revendications 1 à 7, **caractérisé en ce que** l'élément de réglage (6) dans la position initiale définit un débit plus faible que dans la position finale et/ou **en ce qu'**un débit de l'unité de régulateur de débit (5) diminuant lorsque la température augmente est réglé avec l'élément de commande (8) et l'élément de réglage (6).
